(19) **Europäisches Patentamt European Patent Office Office européen des brevets**

(11) **EP 3 722 574 B1**

(12) **EUROPEAN PATENT SPECIFICATION**

(45) Date of publication and mention of the grant of the patent:
**07.12.2022 Bulletin 2022/49**

(21) Application number: **18885132.3**

(22) Date of filing: **07.12.2018**

(51) International Patent Classification (IPC):
**F02B 75/04** *(2006.01)*    **F01M 1/06** *(2006.01)*
**F01M 1/16** *(2006.01)*    **F02D 15/02** *(2006.01)*
**F02B 25/04** *(2006.01)*

(52) Cooperative Patent Classification (CPC):
**F02B 25/04; F01M 1/06; F01M 1/16; F02B 75/045; F02D 15/02; F16J 10/00; F16N 7/38;** F01B 31/14; F02B 75/32

(86) International application number:
**PCT/JP2018/045081**

(87) International publication number:
**WO 2019/112036 (13.06.2019 Gazette 2019/24)**

(54) **ENGINE SYSTEM**

MOTORSYSTEM

SYSTÈME DE MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **07.12.2017   JP 2017235528**

(43) Date of publication of application:
**14.10.2020 Bulletin 2020/42**

(73) Proprietor: **IHI Corporation**
**Tokyo 135-8710 (JP)**

(72) Inventors:
• **MASUDA, Yutaka**
  **Tokyo 135-8710 (JP)**
• **TERAMOTO, Jun**
  **Tokyo 101-0041 (JP)**

(74) Representative: **TBK**
  **Bavariaring 4-6**
  **80336 München (DE)**

(56) References cited:
EP-A1- 3 098 416       WO-A1-2015/108138
WO-A1-2015/108178    WO-A1-2015/108182
CN-A- 106 089 977     DE-A1-102016 106 345
FR-A1- 3 043 720       JP-A- 2000 213 322
JP-A- 2006 241 989    JP-A- 2009 030 508
JP-A- 2013 040 578    JP-A- 2013 083 228
JP-A- 2013 238 223    JP-A- 2017 061 859
JP-U- S63 164 535     US-B2- 9 476 353

## Description

TECHNICAL FIELD

This disclosure relates to an engine system.

Priority is claimed on Japanese Patent Application No. 2017-235528, filed on December 7, 2017.

BACKGROUND ART

For example, Patent Document 1 discloses a large-scale reciprocating piston combustion engine having a crosshead. The large-scale reciprocating piston combustion engine disclosed in Patent Document 1 is a dual fuel engine that can be operated using both a liquid fuel such as heavy oil and a gas fuel such as natural gas. In the large-scale reciprocating piston combustion engine disclosed in Patent Document 1, in order to correspond to both a compression ratio suitable for an operation using the liquid fuel and a compression ratio suitable for an operation using the gas fuel, a crosshead part has an adjustment mechanism that changes the compression ratio by using hydraulic pressure to move a piston rod.

A generic engine system according to the preamble of claim 1 is shown by Patent Document 2.

Citation List

Patent Documents

[0005]

　　　[Patent Document 1] JP 2014 020375 A
　　　[Patent Document 2] EP 3 098 416 A1

DISCLOSURE OF INVENTION

Technical Problem

An engine system having a compression adjustment device that changes the compression ratio as described above changes a bottom dead center position and a top dead center position of a piston by changing a position in a movement direction of the piston rod. In this manner, the compression ratio is adjusted. However, according to the engine system in the related art, a supply timing of a lubricating fluid in the piston is fixed even when the piston rod is moved. Therefore, a supply position of the lubricating fluid supplied to the piston varies when the compression ratio is low and when the compression ratio is high. Consequently, there is a possibility that the lubricating fluid may not be sufficiently supplied into a cylinder.

This disclosure is made in view of the above-described circumstances and aims to sufficiently supply the lubricating fluid into the cylinder in the engine system including a variable compression mechanism.

This is achieved by an engine system having the features of claim 1. Further advantageous developments of the present invention are set out in the dependent claims.

Solution to Problem

According to the present invention, an engine system is provided including a variable compression device having a fluid chamber to which a pressurized working fluid is supplied so that a piston rod connected to a piston is moved in a high compression ratio direction, a supply device that supplies a lubricating fluid to a cylinder portion on which the piston slides, a detection device that outputs a signal including position information of the piston, and a control device that controls the supply device, based on the signal.

According to the present invention, in the first aspect, the control device is configured to change a supply timing of the lubricating fluid of the supply device, when the piston rod is moved in the high compression ratio direction.

According to the present invention, in the second aspect, the control device is configured to adjust a supply amount per unit time of the lubricating fluid in accordance with a preset compression ratio, when the piston rod is moved in the high compression ratio direction.

Preferably, in the second or third aspect, the control device may be configured to increase a supply amount per one time of the lubricating fluid.

Preferably, the detection device may be disposed in the cylinder portion, and may be configured to output the signal including the position information of the piston.

Preferably, the detection device may be configured to have a sensor unit that detects a movement of a detection target fixed to the piston rod in a non-contact manner.

Advantageous Effects of Invention

According to the present invention, the control device changes the supply timing of the lubricating fluid, based on the position of the piston rod or the piston. In this manner, the lubricating fluid can always be supplied to the piston at a constant position by changing a lubricating timing when the position of the piston is changed by the variable compression mechanism. Therefore, the lubricating fluid can be sufficiently supplied into the cylinder.

BRIEF DESCRIPTION OF DRAWINGS

[0016]

　　　FIG. 1 is a sectional view of an engine system according to an embodiment of this disclosure.
　　　FIG. 2 is a schematic sectional view illustrating part of the engine system according to the embodiment of this disclosure.

FIG. 3 is an enlarged sectional view illustrating part of the engine system according to the embodiment of this disclosure.

FIG. 4 is an enlarged sectional view illustrating part of the engine system according to the embodiment of this disclosure.

FIG. 5 is an enlarged sectional view illustrating part of the engine system according to the embodiment of this disclosure.

FIG. 6 is a perspective view illustrating a position detection unit of the engine system according to the embodiment of this disclosure.

FIG. 7 is a sectional view illustrating the position detection unit of the engine system according to the embodiment of this disclosure.

BEST MODE FOR CARRYING OUT THE INVENTION

Hereinafter, an embodiment of an engine system 100 according to this disclosure will be described with reference to the drawings.

[First Embodiment]

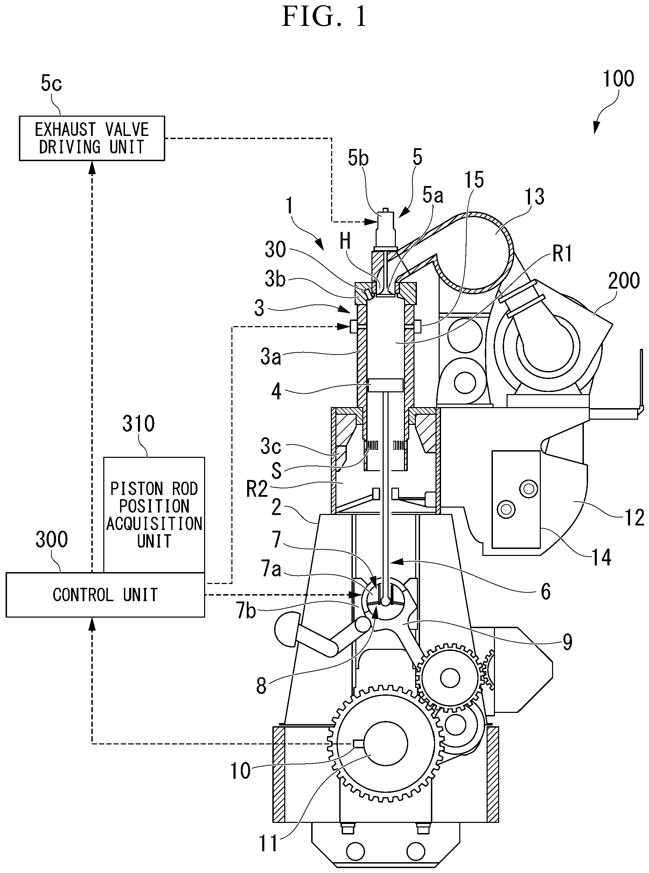

The engine system 100 according to the present embodiment is mounted on a ship such as a large tanker, for example, and has an engine 1, a supercharger 200, and a control unit 300 (control device) as illustrated in FIG. 1. In the present embodiment, the supercharger 200 is regarded as an auxiliary machine, and will be described separately from the engine 1 (main machine). However, the supercharger 200 can be configured to serve as part of the engine 1. The supercharger 200 is not an essential configuration element of the engine system 100 according to the present embodiment and does not have to be disposed in the engine system 100. FIG. 1 is a longitudinal sectional view taken along a center axis of a cylindrical cylinder liner 3a (to be described later) disposed in the engine system 100. In FIG. 1, a side having an exhaust valve unit 5 (to be described later) may be referred to as an upper side, and a side having a crankshaft 11 (to be described later) may be referred to as a lower side, in some cases. A direction intersecting the center axis of the cylinder liner 3a may be referred to as a radial direction, in some cases. A drawing viewed in a direction of the center axis of the cylinder liner 3a may be referred to as a plan view, in some cases.

The engine 1 is a multi-cylinder uniflow scavenging diesel engine and is a dual fuel engine that can perform a gas operation mode for combusting both a gas fuel such as natural gas and a liquid fuel such as heavy oil and a diesel operation mode for combusting the liquid fuel such as the heavy oil. In the gas operation mode, only the gas fuel may be combusted. The engine 1 has a frame 2, a cylinder portion 3, a piston 4, an exhaust valve unit 5, a piston rod 6, a crosshead 7, a hydraulic unit 8, a connecting rod 9, a crank angle sensor 10, a crankshaft 11, a scavenging reservoir 12, an exhaust reservoir 13, an air cooler 14, and a lubricating device 15 (supply device). In addition, a cylinder is configured to include the cylinder portion 3, the piston 4, the exhaust valve unit 5, and the piston rod 6.

The frame 2 is a strength member that supports the engine 1 as a whole and accommodates the crosshead 7, the hydraulic unit 8, and the connecting rod 9. In addition, a crosshead pin 7a (to be described later) of the crosshead 7 can reciprocate inside the frame 2.

The cylinder portion 3 has a cylindrical cylinder liner 3a, a cylinder head 3b, and a cylinder jacket 3c. The cylinder liner 3a is a cylindrical member, and a sliding surface for the piston 4 is formed inside the cylinder liner 3a. A space surrounded by an inner peripheral surface of the cylinder liner 3a and the piston 4 is a combustion chamber R1. In addition, a plurality of scavenging ports S are formed in a lower portion of the cylinder liner 3a. The scavenging ports S are openings arranged along a peripheral surface of the cylinder liner 3a, and allow a scavenging chamber R2 inside the cylinder jacket 3c and the inside of the cylinder liner 3a to communicate with each other. The cylinder head 3b is a lid member disposed in an upper end portion of the cylinder liner 3a. The cylinder head 3b has an exhaust port H formed in a central portion in a plan view, and is connected to the exhaust reservoir 13. In addition, the cylinder head 3b has a fuel injection valve (not illustrated). Furthermore, a cylinder internal pressure sensor 30 (detection device) is disposed in the vicinity of the fuel injection valve of the cylinder head 3b. The cylinder internal pressure sensor 30 detects the pressure inside the combustion chamber R1 and transmits a detection result to the control unit 300. The cylinder jacket 3c is disposed between the frame 2 and the cylinder liner 3a and is a cylindrical member into which a lower end portion of the cylinder liner 3a is inserted. The scavenging chamber R2 is formed inside the cylinder jacket 3c. In addition, the scavenging chamber R2 of the cylinder jacket 3c is connected to the scavenging reservoir 12.

The piston 4 has a substantially columnar shape, is connected to the piston rod 6 (to be described later) and is disposed inside the cylinder liner 3a. In addition, a piston ring 4a is disposed on an outer peripheral surface of the piston 4, and the piston ring 4a seals a gap between the piston 4 and the cylinder liner 3a. The piston 4 slides inside the cylinder liner 3a together with the piston rod 6 by using pressure fluctuations in the combustion chamber R1.

The exhaust valve unit 5 has an exhaust valve 5a, an exhaust valve housing 5b, and an exhaust valve driving unit 5c. The exhaust valve 5a is disposed inside the cylinder head 3b, and the exhaust valve driving unit 5c closes the exhaust port H inside the cylinder portion 3. The exhaust valve housing 5b is a cylindrical housing that houses an end portion of the exhaust valve 5a. The exhaust valve driving unit 5c is an actuator that moves the exhaust valve 5a in a direction along a stroke direction of the piston 4.

The piston rod 6 is an elongated member having one end connected to the piston 4 and the other end connected to the crosshead pin 7a. An end portion of the piston rod 6 is inserted into the crosshead pin 7a and is connected so that the connecting rod 9 is rotatable. In addition, the piston rod 6 has a large diameter portion in which a partial diameter of an end portion on the crosshead pin 7a side is formed to have a large diameter.

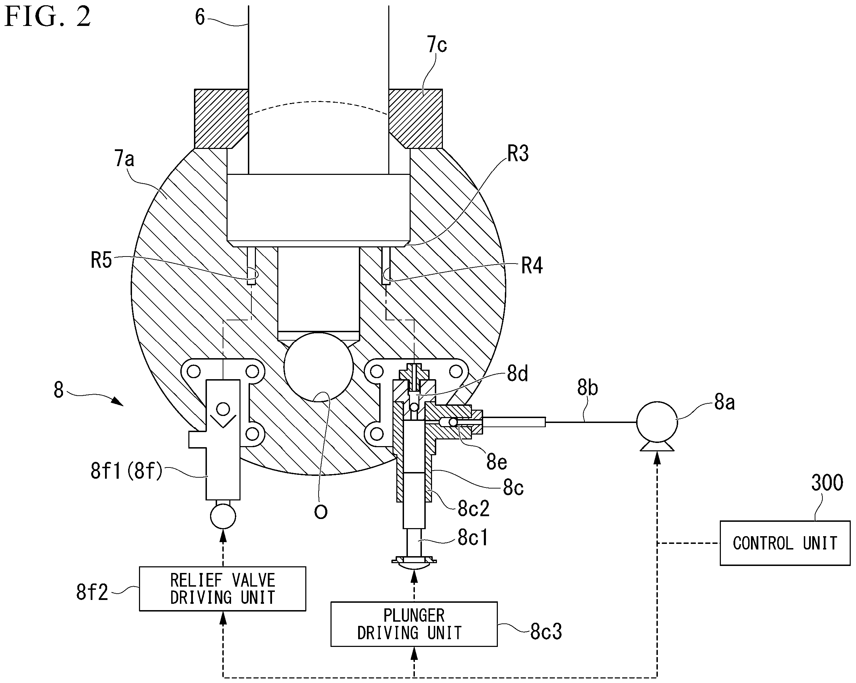

As illustrated in FIGS. 1 and 2, the crosshead 7 has the crosshead pin 7a, a guide shoe 7b, and a lid member 7c. The crosshead pin 7a is a columnar member that movably connects the piston rod 6 and the connecting rod 9 to each other, and an insertion space into which an end portion of the piston rod 6 is inserted has a hydraulic chamber R3 (fluid chamber) which working oil (working fluid) is supplied to and discharged from. An exit hole O penetrating the crosshead pin 7a along an axial direction is formed on a lower side from a center in the crosshead pin 7a. The exit hole O is an opening from which cooling oil passing through a cooling flow path (not illustrated) of the piston rod 6 is discharged. The crosshead pin 7a has a supply flow path R4 that connects the hydraulic chamber R3 and a plunger pump 8c (to be described later) to each other, and a relief flow path R5 that connects the hydraulic chamber R3 and a relief valve 8f (to be described later) to each other.

The guide shoe 7b is a member that pivotally supports the crosshead pin 7a and moves on a guide rail (not illustrated) along the stroke direction of the piston 4 together with the crosshead pin 7a. Since the guide shoe 7b moves along the guide rail, the crosshead pin 7a is restricted in a rotational motion and a movement in a direction other than a linear direction along the stroke direction of the piston 4. The lid member 7c is an annular member which is fixed to an upper portion of the crosshead pin 7a and into which an end portion of the piston rod 6 is inserted. The crosshead 7 transmits a linear motion of the piston 4 to the connecting rod 9.

As illustrated in FIG. 2, the hydraulic unit 8 includes a supply pump 8a, an oscillation pipe 8b, a plunger pump 8c, a first check valve 8d and a second check valve 8e which belong to the plunger pump 8c, and a relief valve 8f. In addition, the piston rod 6, the crosshead 7, the hydraulic unit 8, and the control unit 300 function as a variable compression device according to this disclosure.

The supply pump 8a pressurizes the working oil supplied from a working oil tank (not illustrated) and supplies the working oil to the plunger pump 8c based on an instruction output from the control unit 300. The supply pump 8a is driven using battery power of a ship and can be operated before the liquid fuel is supplied to the combustion chamber R1. The oscillation pipe 8b connects the supply pump 8a and the plunger pump 8c of each cylinder and can oscillate between the plunger pump 8c moving together with the crosshead pin 7a and the fixed supply pump 8a.

The plunger pump 8c is fixed to the crosshead pin 7a and has a rod-shaped plunger 8c1, a cylindrical cylinder 8c2 that slidably accommodates the plunger 8c1, and a plunger driving unit 8c3. The plunger 8c1 is connected to the plunger driving unit 8c3. In this manner, the plunger pump 8c slides inside the cylinder 8c2, pressurizes the working oil, and supplies the working oil to the hydraulic chamber R3. In addition, the cylinder 8c2 has the first check valve 8d disposed in a working oil discharge side opening disposed in an end portion and has the second check valve 8e in a suction side opening disposed on a side peripheral surface. The plunger driving unit 8c3 is connected to the plunger 8c1 and causes the plunger 8c1 to reciprocate based on an instruction output from the control unit 300.

The first check valve 8d has a structure in which a valve body is biased inward of the cylinder 8c2 to close the valve and prevents the working oil supplied to the hydraulic chamber R3 from flowing back to the cylinder 8c2. In addition, when the pressure of the working oil inside the cylinder 8c2 is equal to or greater than a biasing force (valve opening pressure) of a biasing member of the first check valve 8d, the first check valve 8d is opened since the valve body is pressed by the working oil. The second check valve 8e is biased outward of the cylinder 8c2 and prevents the working oil supplied to the cylinder 8c2 from flowing back to the supply pump 8a. In addition, when the pressure of the working oil supplied from the supply pump 8a is equal to or greater than a biasing force (valve opening pressure) of a biasing member of the second check valve 8e, the second check valve 8e is opened since the valve body is pressed by the working oil. The valve opening pressure of the first check valve 8d is higher than the valve opening pressure of the second check valve 8e. When the first check valve 8d is normally operated at a preset compression ratio, the first check valve 8d is not opened by the pressure of the working oil supplied from the supply pump 8a.

The relief valve 8f is disposed in the crosshead pin 7a and has a main body 8f1 and a relief valve driving unit 8f2. The main body 8f1 is a valve connected to the hydraulic chamber R3 and the working oil tank (not illustrated). The relief valve driving unit 8f2 is connected to the valve body of the main body 8f1 and opens and closes the main body 8f1 based on an instruction output from the control unit 300. The relief valve 8f is opened by the relief valve driving unit 8f2, thereby causing the working oil stored in the hydraulic chamber R3 to return to the working oil tank.

As illustrated in FIG. 1, the connecting rod 9 is an elongated member connected to the crosshead pin 7a and connected to the crankshaft 11. The connecting rod 9 converts the linear motion of the piston 4 which is transmitted to the crosshead pin 7a into the rotational motion. The crank angle sensor 10 is a sensor for measuring a crank angle of the crankshaft 11 and transmits a crank pulse signal for calculating the crank angle to the control unit 300.

The crankshaft 11 is an elongated member connected to the connecting rod 9 disposed in the cylinder and is rotated by the rotational motion transmitted by the connecting rod 9, thereby transmitting power to a screw, for example. The scavenging reservoir 12 is disposed between the cylinder jacket 3c and the supercharger 200, and air compressed by the supercharger 200 flows into the scavenging reservoir 12. In addition, the air cooler 14 is disposed inside the scavenging reservoir 12. The exhaust reservoir 13 is a tubular member connected to the exhaust port H of each cylinder and connected to the supercharger 200. The gas discharged from the exhaust port H is temporarily stored in the exhaust reservoir 13 and is supplied to the supercharger 200 in a state where pulsation is suppressed. The air cooler 14 is a device that cools the air inside the scavenging reservoir 12.

The lubricating device 15 is disposed in an outer periphery on the exhaust port H side of the cylinder liner 3a, and supplies lubricating oil (lubricating fluid) toward the inside (combustion chamber R1) of the cylinder liner 3a by using a lubricating hole through which the inside and the outside of the cylinder liner 3a communicate with each other. The lubricating device 15 can change a lubricating amount and a lubricating timing based on an instruction output from the control unit 300.

The supercharger 200 is a device that supplies compressed air to the combustion chamber R1 after compressing air suctioned from an intake port (not illustrated) by using a turbine rotated by gas exhausted from the exhaust port H.

The control unit 300 changes a compression ratio in the combustion chamber R1 by controlling the hydraulic unit 8. Specifically, the control unit 300 acquires position information of the piston rod 6 based on a signal output from the cylinder internal pressure sensor 30, controls the plunger pump 8c, the supply pump 8a, and the relief valve 8f, and adjusts the amount of the working oil in the hydraulic chamber R3. In this manner, the control unit 300 changes the compression ratio by changing the position of the piston rod 6. Furthermore, the control unit 300 changes the lubricating amount and the lubricating timing of the lubricating device 15 based on the position information of the piston rod 6.

The engine system 100 ignites and explodes the fuel injected into the combustion chamber R1 from a fuel injection valve (not illustrated) so that the piston 4 slides inside the cylinder liner 3a and the crankshaft 11 is rotated. Specifically, the fuel supplied to the combustion chamber R1 is mixed with the air flowing from the scavenging port S. Thereafter, the fuel is compressed by the piston 4 moving in a direction toward the top dead center. In this manner, the temperature of the fuel rises and the fuel is spontaneously ignited. In addition, in a case of the liquid fuel, the liquid fuel evaporates by the temperature rise in the combustion chamber R1 and is spontaneously ignited.

Then, the fuel inside the combustion chamber R1 rapidly expands due to spontaneous ignition, and the pressure is applied to the piston 4 in a direction toward the bottom dead center. In this manner, the piston 4 moves in the direction toward the bottom dead center, the piston rod 6 moves together with the piston 4, and the crankshaft 11 is rotated via the connecting rod 9. Furthermore, since the piston 4 is moved to the bottom dead center, the compressed air flows into the combustion chamber R1 from the scavenging port S. Since the exhaust valve unit 5 is driven, the exhaust port H is opened, and the exhaust gas inside the combustion chamber R1 is pushed out to the exhaust reservoir 13 by the compressed air.

In a case where the compression ratio increases, the supply pump 8a is driven by the control unit 300, and the working oil is supplied to the plunger pump 8c. Then, the control unit 300 drives the plunger driving unit 8c3, pressurizes the working oil until the working oil has the pressure which enables the piston rod 6 to be lifted, and supplies the working oil to the hydraulic chamber R3. Due to the pressure of the working oil in the hydraulic chamber R3, the end portion of the piston rod 6 is lifted, and accordingly, the top dead center position of the piston 4 is moved upward (to the exhaust port H side).

In a case where the compression ratio decreases, the relief valve driving unit 8f2 is driven by the control unit 300 so as to drive the relief valve 8f. The hydraulic chamber R3 and the working oil tank (not illustrated) are brought into a communicable state. Then, a load of the piston rod 6 is applied to the working oil in the hydraulic chamber R3, and the working oil inside the hydraulic chamber R3 is pushed out to the working oil tank via the relief valve 8f. In this manner, the working oil in the hydraulic chamber R3 decreases, and the piston rod 6 is moved downward (to the crankshaft 11 side). Accordingly, the top dead center position of the piston 4 is moved downward.

Subsequently, the lubricating timing of the engine system 100 according to the present embodiment will be described.

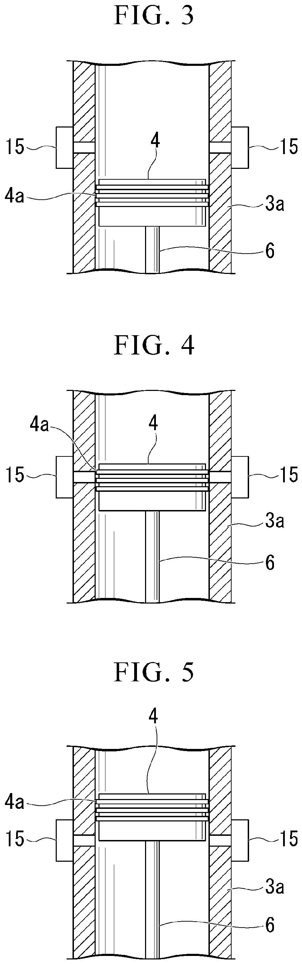

As illustrated in FIGS. 3 to 5, the lubricating device 15 supplies the lubricating oil into the cylinder liner 3a three times, that is, before the piston 4 passes through a lubrication hole, when the piston ring 4a of the piston 4 passes through the lubrication hole, and after the piston ring 4a of the piston 4 passes through the lubricating hole.

For example, the lubricating device 15 performs the lubricating at an interval of approximately once every two cycles. In this manner, the piston ring 4a of the piston 4 does not scrape all of the lubricating oil, and the lubricating oil spreads to the upper end (exhaust port H side) of the cylinder liner 3a.

When the lubricating timing is controlled, the piston rod position acquisition unit 310 calculates a position of the piston rod 6 in a height direction, based on an input from the cylinder internal pressure sensor 30. Specifically, the position of the piston rod 6 in the height direction is calculated by the following procedure.

In a case where the cylinder internal pressure when the piston 4 is located at the bottom dead center is defined as $P_0$ and the cylinder internal pressure when the piston 4 is located at the top dead center is defined as $P_1$, a compression ratio ε is expressed by Equation 1 below. The κ indicates a polytropic index.

[Equation 1]

$$\varepsilon = (P_1/P_0)^{1/\kappa}$$

Based on Equation 1 above, the piston rod position acquisition unit 310 calculates the compression ratio in the cylinder portion 3 from an electric signal (signal including the position information of the piston rod 6) output from the cylinder internal pressure sensor 30. Furthermore, the piston rod position acquisition unit 310 calculates the position of the piston rod 6 in the height direction based on the compression ratio.

The control unit 300 monitors the position on a real time basis by acquiring the position of the piston rod 6 in the height direction which is calculated using the above-described method from the piston rod position acquisition unit 310. When the control unit 300 detects that the piston rod 6 is moved in an upward direction (high compression ratio direction) based on the position of the piston rod 6 in the height direction, the control unit 300 instructs the lubricating device 15 so that three lubricating timings are respectively earlier than the lubricating timings when the compression ratio is low. Furthermore, while the piston rod 6 is moved in the upward direction, the control unit 300 instructs the lubricating device 15 to increase (adjust) the lubricating amount per one time based on a map indicating a correlation between the preset compression ratio and the lubricating amount. The control unit 300 gradually changes the lubricating timing in accordance with the position of the piston rod 6 in the height direction and causes the lubricating device 15 to perform the lubricating so that the lubricating timings are always as illustrated in FIGS. 3 to 5. That is, based on the position of the piston rod 6 in the height direction, the control unit 300 causes the lubricating device 15 to perform the lubricating using the lubricating oil, before the piston 4 passes through the lubricating hole, when the piston ring 4a of the piston 4 passes through the lubricating hole, and after the piston ring 4a of the piston 4 passes through the lubricating hole. When the piston rod 6 is moved in a low compression ratio direction, the lubricating timing is delayed from the lubricating timing when the compression ratio is high. The piston rod position acquisition unit 310 may be disposed adjacent to the control unit 300 as illustrated in FIG. 1, or may be disposed separately from the control unit 300. In any case, the piston rod position acquisition unit 310 is communicably connected to the control unit 300. The piston rod position acquisition unit 310 may have a configuration conforming to the control unit 300. The piston rod position acquisition unit 310 may be part of the control unit 300. Here, the control unit 300 is a computer that controls a supply amount or the like of the fuel, based on an operation or the like performed by a ship's operator. That is, the control unit 300 may be a known computer including a CPU, a RAM, and a ROM which can perform the above-described control. Details of the control performed by the control unit 300 may be defined by software that can be optionally changed or updated by a user. As illustrated in FIG. 1 or 2, the control unit 300 is electrically or electronically connected. Alternatively, the control unit 300 receives a feedback of the pressure inside the combustion chamber R1 from the cylinder internal pressure sensor 30 connected so that a signal can be communicated by wireless or wire communication, and a crank pulse signal from the crank angle sensor 10. Based on the feedback and the signal, if necessary, the control unit 300 appropriately controls the supply pump 8a, the plunger driving unit 8c3, the relief valve driving unit 8f2, the exhaust valve driving unit 5c, the lubricating device 15, and the hydraulic unit 8.

According to the engine system 100 in the present embodiment, the control unit 300 changes the lubricating timing of the lubricating device 15, based on the position of the piston rod 6 in the height direction. Therefore, the lubricating can be performed at a timing at which a relative position between the lubricating device 15 and the piston 4 is always constant. In this manner, the lubricating oil can be supplied to the upper end side of the cylinder liner 3a, and lubricating ability can be maintained inside the cylinder liner 3a.

In addition, the fuel (heavy oil) used for the operation at the high compression ratio is highly corrosive, and the cylinder liner 3a needs to be sufficiently lubricated. According to the engine system 100 in the present embodiment, when the piston rod 6 is moved upward, the control unit 300 causes the lubricating device 15 to increase the lubricating amount per one time based on the position of the piston rod 6 in the height direction. In this manner, the lubricating ability can be sufficiently maintained even during the operation at the high compression ratio.

[Second Embodiment]

A modification example of the above-described first embodiment will be described as a second embodiment. The same reference numerals will be given to members having the same configuration as that according to the above-described first embodiment, and description thereof will be omitted.

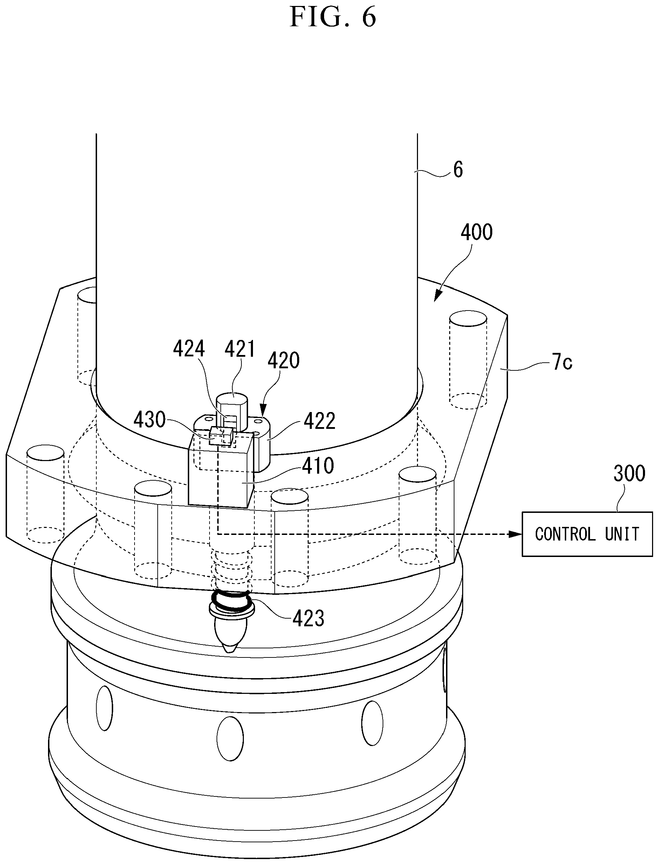

The engine system 100 according to the present embodiment has a position detection unit 400 (detection device). As illustrated in FIG. 6, the position detection unit 400 has a magnetic sensor 410 (sensor unit), a rod portion 420, and a communication unit 430. The magnetic sensor 410 is a sensor which is fixed to the lid member 7c and generates an electric signal (signal including position information of the piston rod 6) by using a change in a magnetic field which is caused by the movement of the rod 421 (to be described later).

The rod portion 420 has a rod 421, a holding portion 422, a biasing spring 423, and a magnetic member 424. The rod 421 is a rod-shaped member having a flange that holds the biasing spring 423 in the vicinity of an end portion. The rod 421 is inserted into a through-hole formed in the lid member 7c together with the holding portion 422 and is disposed along the extending direction of the piston rod 6. The rod 421 is pressed against and fixed to a large diameter portion of the end portion of the piston rod 6 by the biasing spring 423. The holding portion 422 is a cylindrical member fixed to the lid member 7c and into which the rod 421 is inserted. The rod 421 can reciprocate inside the holding portion 422. The biasing spring 423 is disposed between the flange of the rod 421 and the large diameter portion of the piston rod 6 and biases the rod 421 toward the large diameter portion of the piston rod 6. The magnetic member 424 is a member in which a plurality of magnets are arranged at an equal interval and is disposed on a peripheral surface of the rod 421 along the extending direction of the rod 421.

The communication unit 430 is a telemeter that transmits the electric signal detected by the magnetic sensor 410 to the control unit 300 by wireless communication.

When the rod 421 is moved due to the movement of the piston rod 6 in the position detection unit 400, the magnetic member 424 is moved. Accordingly, the magnetic field detected by the magnetic sensor 410 is changed. The magnetic sensor 410 outputs the change in the magnetic field as the electric signal. In the present embodiment, the control unit 300 calculates the position of the piston rod 6 in the height direction based on an input from the position detection unit 400.

According to the engine system 100 in the present embodiment, the control unit 300 changes the lubricating timing of the lubricating device 15 based on the position of the piston rod 6 in the height direction. Therefore, the lubricating can be performed at the timing at which the relative position between the lubricating device 15 and the piston 4 is always constant. In this manner, the lubricating oil can be supplied to the upper end side of the cylinder liner 3a, and lubricating ability can be maintained inside the cylinder liner 3a. Furthermore, according to the present embodiment, the position of the piston rod 6 in the height direction can be directly detected. Therefore, the position of the piston rod 6 in the height direction can be more accurately recognized. The piston rod 6, the crosshead 7, the hydraulic unit 8, the control unit 300, and the position detection unit 400 function as the variable compression device according to this disclosure.

[Third Embodiment]

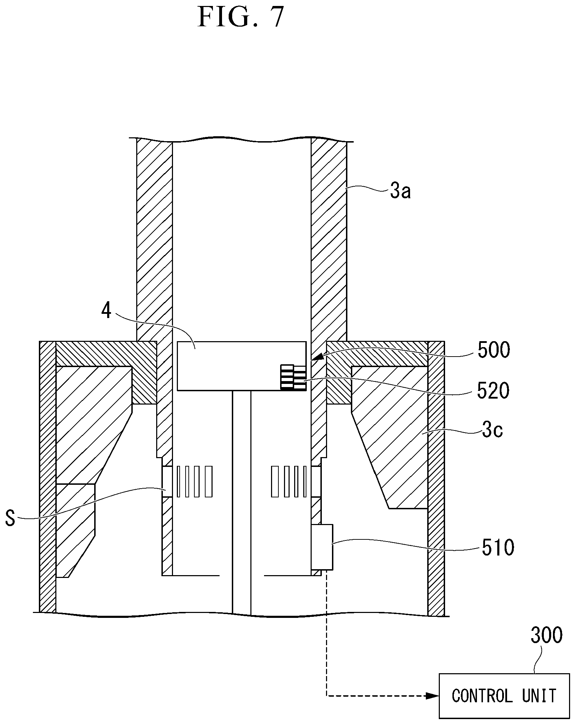

The engine system 100 according to the present embodiment has a position detection unit 500 (detection device) instead of the position detection unit 400. As illustrated in FIG. 7, the position detection unit 500 has a sensor unit 510 and a detection target 520. The sensor unit 510 is embedded in and fixed to a lower end side of the inner peripheral surface of the cylinder liner 3a, which is located farther away from the combustion chamber R1 than the scavenging port S. The sensor unit 510 is a sensor which generates an electric signal (signal including the position information of the piston rod 6) by using a change in a distance from a surface of the detection target 520 which is caused by the movement of the two detection targets 520.

The detection targets 520 are disposed on a lower end side of a sliding surface of the piston 4 and are respectively configured to include a plurality of irregularities formed at an equal interval in a sliding direction of the piston 4. The detection target 520 is disposed below (on the piston rod 6 side) the piston ring 4a (not illustrated) disposed in the piston 4. In this manner, the detection target 520 is less likely to be affected by the lubricating oil on the sliding surface of the piston 4.

In the position detection unit 500, when the piston 4 is moved due to the movement of the piston rod 6, the irregularities of the detection target 520 are moved relative to the sensor unit 510. Accordingly, the distance from the detection target 520 to the sensor unit 510 detected by the sensor unit 510 is changed. The sensor unit 510 outputs the change in the irregularities, that is, a change in the relative distance from the surface of the detection target 520 to the sensor unit 510 to the control unit 300 as the electric signal. According to the present embodiment, the control unit 300 calculates the position of the piston rod 6 in the height direction based on an input from the position detection unit 500.

According to the engine system 100 in the present embodiment, the control unit 300 changes the lubricating timing of the lubricating device 15 based on the position of the piston rod 6 in the height direction. Therefore, the lubricating can be performed at the timing at which the relative position between the lubricating device 15 and the piston 4 is always constant. In this manner, the lubricating oil can be supplied to the upper end side of the cylinder liner 3a, and lubricating ability can be maintained inside the cylinder liner 3a.

Furthermore, the sensor unit 510 is embedded in the cylinder liner 3a fixed to the frame 2. In this manner, the sensor unit 510 and the control unit 300 can be easily connected to each other by wire communication. Therefore, the sensor unit 510 is easily installed without needing to provide the communication unit or the like.

Hitherto, the preferred embodiments according to this disclosure have been described with reference to the drawings. However, this disclosure is not limited to the above-described embodiments. Various shapes or combinations of respective components illustrated in the above-described embodiments are merely examples and can be modified in various ways based on design requirements within the scope as claimed.

In the above-described embodiments, the lubricating timing is provided three times. However, this disclosure is not limited thereto. The number of the lubricating timings or the lubricating timing can be changed depending on a shape of the piston 4 or a characteristic of the engine.

In addition, the detection device which detects the position of the piston rod 6 in the height direction is not limited to the form disclosed in the above-described embodiments. For example, the position of the piston rod 6 or the piston 4 may be measured by a laser distance meter provided as the detection device.

In addition, in the above-described embodiments, the control unit 300 increases the lubricating amount when the piston rod 6 is moved in the high compression ratio direction. However, this disclosure is not limited thereto. Based on a map indicating a correlation between the compression ratio and the lubricating amount, the lubricating amount may be decreased or remain unchanged. In addition, in the above-described embodiments, when the piston rod 6 is moved in the high compression ratio direction, the control unit 300 may adjust the supply amount per unit time of the lubricating fluid in accordance with the preset compression ratio.

Industrial Applicability

According to this disclosure, the engine system including the variable compression mechanism can sufficiently supply the lubricating fluid into the cylinder.

Reference Signs List

1: engine
2: frame
3: cylinder portion
3a: cylinder liner
3b: cylinder head
3c: cylinder jacket
4: piston
4a: piston ring
5: exhaust valve unit
5a: exhaust valve
5b: exhaust valve housing
5c: exhaust valve driving unit
6: piston rod
7: crosshead
7a: crosshead pin
7b: guide shoe
7c: lid member
8: hydraulic unit
8a: supply pump

8b: oscillation pipe
8c: plunger pump
8c1: plunger
8c2: cylinder
8c3: plunger driving unit
8d: first check valve
8e: second check valve
8f: relief valve
8f1: main body
8f2: relief valve driving unit
9: connecting rod
10: crank angle sensor
11: crankshaft
12: scavenging reservoir
13: exhaust reservoir
14: air cooler
15: lubricating device
30: cylinder internal pressure sensor
100: engine system
200: supercharger
300: control unit
310: piston rod position acquisition unit
400: position detection unit
410: magnetic sensor
420: rod portion
421: rod
422: holding portion
423: biasing spring
424: magnetic member
430: communication unit
500: position detection unit
510: sensor unit
520: detection target
H: exhaust port
O: exit hole
R1: combustion chamber
R2: scavenging chamber
R3: hydraulic chamber
R4: supply flow path
R5: relief flow path
S: scavenging port

**Claims**

1.  An engine system (100) comprising:

    a variable compression device (6, 7, 8, 300) having a fluid chamber (R3) to which a pressurized working fluid is supplied so that a piston rod (6) connected to a piston (4) is moved in a high compression ratio direction;
    a supply device (15) that supplies a lubricating fluid to a cylinder portion (3) on which the piston (4) slides;
    a detection device (400) that outputs a signal including position information of the piston (4); and

a control device (300) that controls the supply device (15) based on the signal,

wherein the control device (300) changes a supply timing of the lubricating fluid of the supply device (15), when the piston rod (6) is moved in the high compression ratio direction, **characterized in that**

the control device (300) adjusts a supply amount per unit time of the lubricating fluid in accordance with a preset compression ratio ($\varepsilon$), when the piston rod (6) is moved in the high compression ratio direction.

2. The engine system (100) according to claim 1, wherein the control device (300) increases a supply amount per one time of the lubricating fluid.

3. The engine system (100) according to any one of claim 1, wherein the detection device (400) is disposed in the cylinder portion (3) and outputs the signal including the position information of the piston (4).

4. The engine system (100) according to any one of claim 1, wherein the detection device (400) has a sensor unit (410) that detects a movement of a detection target (520) fixed to the piston rod (6) in a non-contact manner.

5. The engine system (100) according to claim 2, wherein the detection device (400) is disposed in the cylinder portion (3) and outputs the signal including the position information of the piston (4).

6. The engine system (100) according to claim 2, wherein the detection device (400) has a sensor unit (410) that detects a movement of a detection target (520) fixed to the piston rod (6) in a non-contact manner.

**Patentansprüche**

1. Ein Motorsystem (100), das aufweist:

eine variable Verdichtungsvorrichtung (6, 7, 8, 300), die eine Fluidkammer (R3) hat, der ein mit Druck beaufschlagtes Arbeitsfluid zugeführt wird, so dass eine Kolbenstange (6), die mit einem Kolben (4) verbunden ist, in einer Hochverdichtungsverhältnisrichtung bewegt wird;

eine Zuführvorrichtung (15), die einem Zylinderabschnitt (3), an dem der Kolben (4) gleitet, ein Schmierfluid zuführt;

eine Erfassungsvorrichtung (400), die ein Signal ausgibt, das Positionsinformationen des Kolbens (4) beinhaltet; und

eine Steuervorrichtung (300), die die Zuführvorrichtung (15) basierend auf dem Signal steuert,

wobei die Steuervorrichtung (300) einen Zuführzeitpunkt des Schmierfluids der Zuführvorrichtung (15) ändert, wenn die Kolbenstange (6) in der Hochverdichtungsverhältnisrichtung bewegt wird,

**dadurch gekennzeichnet, dass**

die Steuervorrichtung (300) eine Zuführmenge pro Zeiteinheit des Schmierfluids in Übereinstimmung mit einem voreingestellten Verdichtungsverhältnis (a) einstellt, wenn die Kolbenstange (6) in der Hochverdichtungsverhältnisrichtung bewegt wird.

2. Motorsystem (100) nach Anspruch 1, wobei die Steuereinrichtung (300) eine Zuführmenge pro Zeiteinheit des Schmierfluids erhöht.

3. Motorsystem (100) nach einem der Ansprüche 1, wobei die Erfassungsvorrichtung (400) in dem Zylinderabschnitt (3) angeordnet ist und das Signal ausgibt, das die Positionsinformationen des Kolbens (4) beinhaltet.

4. Motorsystem (100) nach einem der Ansprüche 1, wobei die Erfassungsvorrichtung (400) eine Sensoreinheit (410) hat, die eine Bewegung eines an der Kolbenstange (6) fixierten Erfassungsziels (520) berührungslos erfasst.

5. Motorsystem (100) nach Anspruch 2, wobei die Erfassungsvorrichtung (400) im Zylinderabschnitt (3) angeordnet ist und das Signal ausgibt, das die Positionsinformationen des Kolbens (4) beinhaltet.

6. Motorsystem (100) nach Anspruch 2, wobei die Erfassungsvorrichtung (400) eine Sensoreinheit (410) hat, die eine Bewegung eines an der Kolbenstange (6) fixierten Erfassungsziels (520) berührungslos erfasst.

**Revendications**

1. Système (100) de moteur, comprenant :

un dispositif de compression variable (6, 7, 8, 300) pourvu d'une chambre de fluide (R3) alimentée en fluide de travail sous pression de façon à déplacer une tige (6) de piston reliée à un piston (4) dans une direction à fort taux de compression ;

un dispositif d'alimentation (15) qui alimente en fluide lubrifiant une partie cylindre (3) sur laquelle coulisse le piston (4) ;

un dispositif de détection (400) qui délivre un signal comportant des informations de position du piston (4) ; et

un dispositif de commande (300) qui commande le dispositif d'alimentation (15) sur la base du signal,

le dispositif de commande (300) modifiant un moment d'alimentation en fluide lubrifiant du dispositif d'alimentation (15) lorsque la tige (6) de piston est déplacée dans la direction à fort taux de compression, **caractérisé en ce que**

le dispositif de commande (300) ajuste une quantité d'alimentation en fluide lubrifiant par unité de temps sur la base d'un rapport de compression prédéfini ($\varepsilon$) lorsque la tige (6) de piston est déplacée dans la direction à fort taux de compression.

2. Système (100) de moteur selon la revendication 1, dans lequel le dispositif de commande (300) augmente à chaque fois une quantité d'alimentation en fluide lubrifiant.

3. Système (100) de moteur selon l'une quelconque de la revendication 1,
dans lequel le dispositif de détection (400) est placé dans la partie cylindre (3) et délivre le signal comportant les informations de position du piston (4).

4. Système (100) de moteur selon l'une quelconque de la revendication 1,
dans lequel le dispositif de détection (400) est pourvu d'une unité capteur (410) qui détecte un mouvement d'une cible de détection (520) fixée à la tige (6) de piston sans contact.

5. Système (100) de moteur selon la revendication 2, dans lequel le dispositif de détection (400) est placé dans la partie cylindre (3) et délivre le signal comportant les informations de position du piston (4).

6. Système (100) de moteur selon la revendication 2, dans lequel le dispositif de détection (400) est pourvu d'une unité capteur (410) qui détecte un mouvement d'une cible de détection (520) fixée à la tige (6) de piston sans contact.

# FIG. 1

FIG. 2

# FIG. 3

# FIG. 4

# FIG. 5

FIG. 6

# FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017235528 A
- JP 2014020375 A

- EP 3098416 A1